Europäisches Patentamt

European Patent Office

Office européen des brevets

(11) Veröffentlichungsnummer : **0 143 944**
**B1**

# (12) EUROPÄISCHE PATENTSCHRIFT

(45) Veröffentlichungstag der Patentschrift :
**11.01.89**

(21) Anmeldenummer : **84111905.0**

(22) Anmeldetag : **04.10.84**

(51) Int. Cl.⁴ : **B 29 B 9/06**, B 29 C 47/78,
B 29 C 47/88, B 29 C 67/00

(54) **Vorrichtung zum Abkühlen und Granulieren von Strängen aus thermoplastischen Kunststoffen.**

(30) Priorität : 04.10.83 DE 3336032

(43) Veröffentlichungstag der Anmeldung :
**12.06.85 Patentblatt 85/24**

(45) Bekanntmachung des Hinweises auf die Patenterteilung : **11.01.89 Patentblatt 89/02**

(84) Benannte Vertragsstaaten :
**BE CH FR GB IT LI NL**

(56) Entgegenhaltungen :
**DE–A– 2 218 210**
**DE–A– 2 443 964**
**DE–B– 2 503 455**
**DE–C– 1 134 057**
**US–A– 3 393 425**

(73) Patentinhaber : **AUTOMATIK Apparate-Maschinenbau GmbH**
**Ostring 19**
**D-8754 Grossostheim (DE)**

(72) Erfinder : **Hunke, Friedrich**
**Westring 38**
**D-8754 Grossostheim 2 (DE)**

(74) Vertreter : **Bardehle, Heinz, Dipl.-Ing. et al**
**Patent- und Rechtsanwälte Bardehle-Pagenberg-Dost-Altenburg & Partner Galileiplatz 1 Postfach 86 06 20**
**D-8000 München 86 (DE)**

**Beschreibung**

Die Erfindung bezieht sich auf eine Vorrichtung zum Abkühlen und Granulieren von schmelzflüssig aus Düsen austretenden Strängen aus thermoplastischen Kunststoffen und Erzeugung getrockneten Granulats, mit einer mit ihrem oberen Ende unter den Düsen angeordneten geneigten Ablaufrinne, einem dem unteren Ende der Ablaufrinne nachgeordneten Granulator und einer auf der Ablaufrinne einen Kühlflüssigkeitsstrom erzeugenden Einrichtung, wobei vom unteren Ende der Ablaufrinne die Stränge in den Eintritt des Granulators gelangen.

Eine derartige Vorrichtung ist in den Fig. (5) und (6) der DE-A-22 18 210 dargestellt. In dieser Druckschrift sind weiterhin Maßnahmen offenbart, durch die eine Trocknung herbeigeführt wird. Bei den Vorrichtungen gemäß den vorstehend erwähnten Fig. (5) und (6) handelt es sich um ein netzförmig gestaltetes Transportband, auf dessen Anfang das vom Granulator gelieferte nasse Granulat abgeladen wird, das während seiner Förderung durch das Transportband unter der Wirkung der Schwerkraft daß ihm anhaftende Wasser in gewissem Umfang verliert.

Eine andere in der genannten Druckschrift offenbarte Methode der Trocknung besteht darin, zwischen das Ende der Ablaufrinne und den Eingang des Granulators ein schräg aufwärts gerichtetes netzförmig gestaltetes Transportband zu schalten, über dem eine auf das Transportband zugerichtete Gebläse-Einrichtung angeordnet ist, unter deren Wirkung das vom Transportband geförderten Granulat anhaftende Wasser in gewissem Umfang weggeblasen wird.

Der Erfindung liegt die Aufgabe zugrunde, die eingangs beschriebene Vorrichtung konstruktiv zu vereinfachen und hinsichtlich ihrer Trocknungswirksamkeit zu verbessern. Erfindungsgemäß geschieht dies dadurch, daß vor dem unteren Ende der Ablaufrinne diese in Ablaufrichtung mit zwei aufeinanderfolgenden Zonen mit Durchlässen versehen ist, die den freien Durchtritt der Kühlflüssigkeit gestatten, von denen die in Ablaufrichtung erste Zone zu einem Wasserablauf führt und die zweite Zone von einem im wesentlichen in Richtung der Schwerkraft verlaufenden Luftstrom beaufschlagt ist.

Bei dieser Gestaltung der Vorrichtung werden die beiden dem Wasserentzug dienenden Zonen in die Ablaufrinne integriert, und zwar dadurch, daß die Ablaufrinne vor ihrem unteren Ende mit den beiden Zonen versehen wird. Aufgrund der Aufteilung in zwei Zonen ergibt sich eine besonders hohe Intensität des Wasserentzugs, da die erste Zone lediglich in Folge freien Durchtritts der Kühlflüssigkeit den Hauptanteil des den Strängen anhaftenden Wassers abführt, und zwar unter Ausnutzung der am billigsten zur Verfügung stehenden Energie, nämlich der Schwerkraft, während in der folgenden Zone dann nur noch ein relativ kleiner verbleibender Wasserrest zu beseitigen ist, auf den der in Richtung der Schwerkraft verlaufende Luftstrom besonders intensiv zu wirken vermag. Die Folge davon ist, daß einerseits sich eine gut überschaubare und mit einfachen Mitteln realisierbare Konstruktion ergibt, andererseits für den Wasserentzug besonders günstige Voraussetzungen durch die Aufteilung in die beiden genannten Zonen geschaffen werden. Dabei wirkt sich besonders günstig die Tatsache aus, daß in der zweiten Zone nur noch ein relativ kleiner Rest von Wasser zu beseitigen ist, was die Arbeitsweise der den Luftstrom erzeugenden Einrichtung erleichtert und in dieser Zone zu einem entsprechend geringen Energieverbrauch führt.

Den die zweite Zone beaufschlagenden Luftstrom erzeugt man zweckmäßigerweise so, daß die zweite Zone zu einem Exhauster führt.

Für die Gestaltung der Durchlässe in den beiden Zonen bestehen verschiedene Möglichkeiten. Vorteilhaft werden die Durchlässe durch Siebe gebildet. Es ist aber auch möglich, die Durchlässe durch parallel mit Zwischenraum angeordneten Stäben auszubilden.

Um die Wasserabscheidung in der ersten Zone zu intensivieren, läßt man die Ablaufrinne vorteilhaft mit einer Rundung in die erste Zone übergehen. Aufgrund dieser Rundung ergibt sich eine Haftung des Wasserstromes an der Oberfläche der Rundung, wodurch der Wasserstrom in eine quer zu der ersten Zone verlaufende Richtung umgelenkt wird, so daß das von der ersten Zone aufgenommene Wasser nicht flach über die Zone verläuft und dabei von den Seiten der Durchlässe abprallen kann. Aufgrund der Rundung wird es vielmehr direkt, vorzugsweise unter 90°, zur Oberflächenrichtung der Zone in die Durchlässe geleitet, wodurch die erste Zone dem ihr zufließenden Wasser den geringst möglichen Widerstand bietet.

Der vorstehend beschriebene Entzug von Kühlflüssigkeit, insbesondere Wasser, vor dem Granulieren der Kunststoffstränge eröffnet die Möglichkeit, im Fall besonders hoher Anforderungen hinsichtlich des Trocknungsgrades des Granulats dem Granulator einem Trockner nachzuschalten, dessen Trocknungsintensität besonders hoch ist bei Zuführung von bereits weitgehend vorgetrocknetem Granulat. Hierzu läßt man den Ausgang des Granulators in einen Luftzuführungskanal münden, der an ein trichterförmiges Gehäuse mit Deckel etwa tangential im unteren Konusbereich des Gehäuses angeschlossen ist, wobei die Luftgeschwindigkeit im Luftzuführungskanal so gewählt ist, daß das vom Luftstrom mitgerissene Granulat auf die Innenwand des Konus trifft, in Richtung auf den Deckel mehrfach reflektiert und vom Deckel zum Trichterauslaß abgelenkt wird.

Aufgrund der trichterförmigen Gestaltung des Gehäuses wird das auf die Innenwand des Konus auftreffende Granulat in Richtung Deckel, also entgegen der Schwerkraft, abgelenkt, wobei es mehrfach reflektiert wird und schließlich den Deckel erreicht, von wo es dann nach unten hin reflektiert wird und in den Trichterauslaß gelangt, gegebenenfalls unter vorherigen weiteren Reflektionen an der Innenwand des Konus. Aufgrund dieser Gestaltung ergibt sich eine relativ große Verweilzeit des Granulates im Gehäuse und infolge dessen ein hoher Grad an Entzug von gegebenenfalls dem Granulat noch anhaftenden Wasser.

Bei dem Trocknungsprozeß sowohl vor dem Granulieren als auch nach dem Granulieren wird die im Granulat gespeicherte Wärme zusätzlich ausgenutzt, die zu einer Verdampfung von dem Granulat anhaftenden Wassers führt. Das Ergebnis der zusätzlichen Trocknung und Ausnutzung des trichterförmigen Gehäuses ist, daß ein Granulat erzeugt werden kann, dessen Restfeuchte kleiner als 0,05 % ist (Gewichtsprozente des Restwassers in bezug auf das Gesamtgewicht des Granulats).

Um dem Gehäuse eine gute Luftdurchtrittsmöglichkeit zu geben, bildet man es zweckmäßig, zumindest teilweise siebartig aus. Hierdurch kann der dem Gehäuse zugeführte Luftstrom ungehindert entweichen, außerdem unterstützt diese Ausbildung ein Abschleudern von Wasserresten bei Aufprall des Granulats auf die Innenwand des Gehäuses.

In den Figuren ist ein Ausführungsbeispiel der Erfindungen dargestellt. Es zeigt :

Fig. 1  die gesamte Vorrichtung in prinzipieller Darstellung in Seitensicht,

Fig. 2  einem, die erste und die zweite Zone zeigenden Ausschnitt aus der Anlage gemäß Fig. 1,

Fig. 3  eine deutlichere Darstellung des in der Fig. 1 gezeigten trichterförmigen Gehäuses.

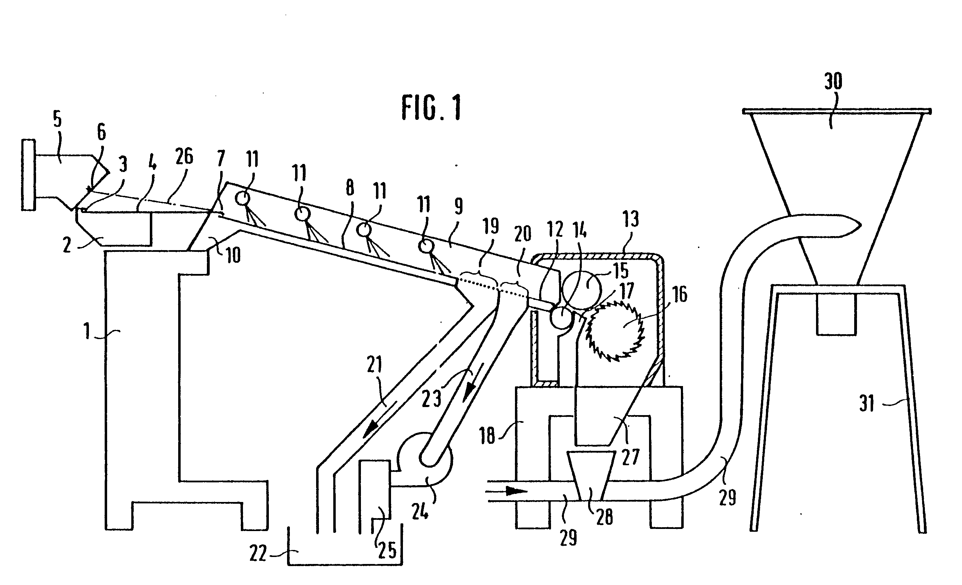

Die in der Fig. 1 dargestellte Vorrichtung enthält das Gestell 1, auf dem der Wasserkasten 2 befestigt ist, dem in an sich bekannter Weise Wasser zugeführt wird (siehe z. B. Fig. 1 der DE-B-25 03 455), das hier als Kühlflüssigkeit dient. Die Kühlflüssigkeit strömt aus der Schlitzdüse 3 auf den Ablauftisch 4 und über diesen nach rechts hin als ein Wasserfilm, der auf den Ablauftisch 4 auftreffende Stränge thermoplastischen Kunststoffs mitnimmt. Oberhalb des Ablauftischs 4 ist das Düsenpaket 5 angeordnet, von dem eine Düse 6 dargestellt ist. Dem Düsenpaket 5 wird in hier nicht interessierender, an sich bekannter Weise thermoplastischer Kunststoff schmelzflüssig zugeführt und aus der Düse 6 ausgepresst. Die Gestaltung eines derartigen Düsenpaketes geht beispielsweise aus der oben erwähnten Fig. 4 der DE-A-2 218 210 hervor. In entsprechender Weise sind bei der in Fig. 1 dargestellten Vorrichtung mehrere Düsen 6 auf einer Linie hintereinanderliegend vorgesehen.

Aus den Düsen 6 austretende Stränge fallen zunächst auf den Ablauftisch 4 und werden von dem im Ablauftisch 4 überströmenden Wasserfilm mitgenommen, bis sie über das Ende 7 des Ablauftischs 4 zur Ablaufrinne 8 gelangen, auf der sie in etwa paralleler Anordnung herabgleiten, wie dies ebenfalls in der erwähnten Figur 4 der DE-A-2 218 210 dargestellt ist. Die Ablaufrinne 8 wird in dem Gehäuse 9 gehalten, das sich mit seiner linken Seite über den Ausleger 10 auf dem Gestell 1 abstützt. Im Gehäuse 9 sind vier Sprühdüsen 11 angeordnet, die, falls erforderlich, zusätzlich Kühlflüssigkeit, insbesondere Wasser, auf die Ablaufrinne 8 sprühen und damit den auf die Kunststoffstränge ausgeübten Kühleffekt erhöhen.

Die Ablaufrinne 8 leitet mit ihrem unteren Ende 12 die über sie herabgleitenden Kunststoffstränge dem Granulator 13 zu, der die beiden Einzugswalzen 14 und 15 sowie die Messerwalze 16 enthält. Die Messerwalze arbeitet gegen das gleichzeitig als Zuführtisch wirkende Gegenmesser 17. Dieser konstruktive Aufbau eines Granulators ist für sich bekannt. Der Granulator 13 ist auf dem Ständer 18 montiert.

Die Ablaufrinne 8 ist vor ihrem unteren Ende 12 mit zwei aufeinander folgenden Zonen mit Durchlässen versehen, die den freien Durchtritt der Kühlflüssigkeit gestatten. Es sind dies die erste Zone 19 und die zweite Zone 20. Die Durchlässe sind in der Fig. 1 durch eine punktierte Verlängerung der Ablaufrinne 8 dargestellt. Es handelt sich dabei um Siebe, über die die von der Ablaufrinne 8 geführten Kunststoffstränge hinabgleiten. Die Siebe bewahren also in den Zonen 19 und 20 für die Kunststoffstränge den Charakter der Ablaufrinne 8, sorgen aber aufgrund der in ihnen enthaltenen Durchlässe dafür, daß als Kühlflüssigkeit verwendetes Wasser hindurchtreten kann. Das Wasser gelangt dabei zunächst zu der ersten Zone 19, wo es unter der Wirkung der Schwerkraft in den Wasserablauf 21 gelangt, der zu dem Sammelbecken 22 führt, aus dem es in bekannter Weise nach Reinigung wieder dem Wasserkasten 2 zugeführt wird. Auf diese Weise wird mittels der ersten Zone 19 der wesentliche Teile des Kühlwassers von der Ablaufrinne 8 weggeführt. Der den Kunststoffsträngen dann noch anhaftende Wasseranteil wird größtenteils mittels der zweiten Zone 20 beseitigt, die ebenfalls aus einem Sieb besteht und die über den Luftschlauch 23 an den Exhauster 24 angeschlossen ist. Der Exhauster 24 saugt Luft mit hoher Geschwindigkeit durch das Sieb der zweiten Zone 20, wodurch an den Strängen verbliebenes Restwasser größtenteils abgesogen wird. Der Exhauster 24 ist an den Tropfenabscheider 25 angeschlossen, der in dem ihm zugeführten Luftstrom enthaltene Wassertröpfchen abscheidet und ebenfalls dem Sammelbecken 22 zuführt.

Aufgrund der Wirkung der Einzugswalzen 14 und 15 werden von diesen Walzen erfaßte Kunststoffstränge straff über die Ablaufrinne 8 gezogen, wobei die Stränge oberhalb des Ablauftisches 4 die durch die strichpunktiert gezeichnete Linie 26 dargestellte Lage einnehmen.

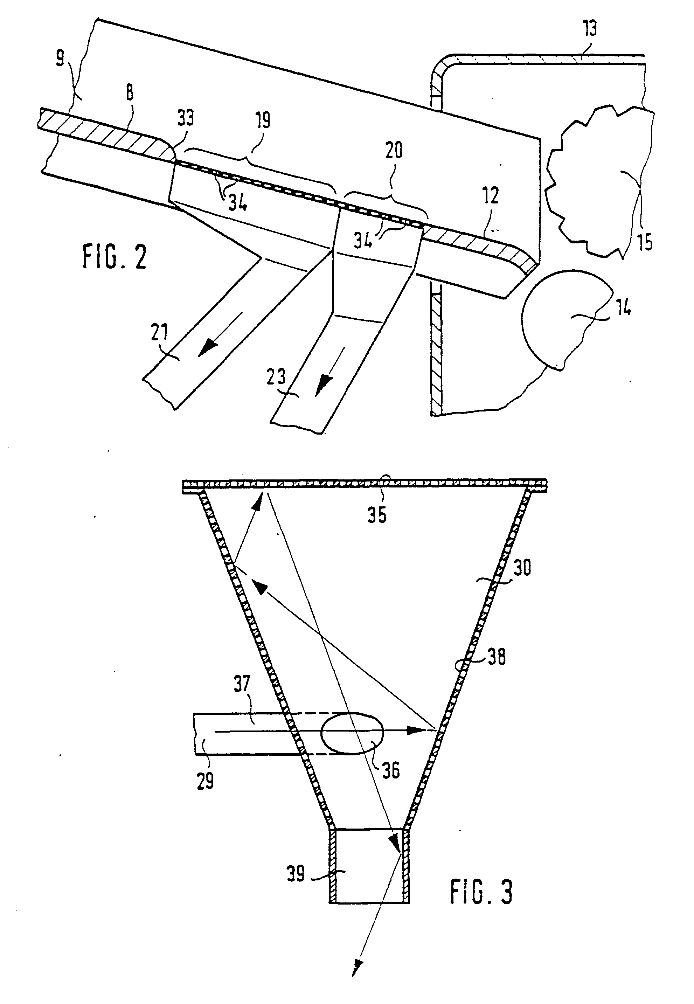

Das vom Granulator 13 erzeugte Granulat gelangt über den Abfallschacht 27 in den Trichter 28, in den der Luftzuführungskanal 29 mündet. Dieser setzt sich hinter dem Trichter 28 fort, wobei durch in bekannter Weise vorgesehene Injektormittel im Trichter 28 dafür gesorgt wird, daß die den Luftzuführungskanal 29 durchströmende Luft nicht seitlich über den Trichter 28 entweichen kann. Der im Luftzuführungskanal 29 geführte Luftstrom wird dem trichterförmigen Gehäuse 30 zugeführt, daß als Nachtrockner dient und im einzelnen anhand der Fig. 3 beschrieben wird. Das trichterförmige Gehäuse 30 ruht auf dem Gestell 31.

Durch die in der Fig. 1 dargestellte Vorrichtung werden Kunststoffstränge, die schmelzflüssig aus den Düsen 6 austreten, mittels der von Kühlwasser beschickten Ablaufrinne 8 gekühlt und zumindest oberflächlich soweit in festen Zustand überführt, daß hinter der Ablaufrinne 8 das Granulieren der Kunststoffstränge mittels des Granulators 13 möglich ist. Dabei wird bereits vor dem Granulator 13 durch die beiden Zonen 19 und 20 das Kühlwasser weitgehend abgeschieden. Am Granulat noch verbliebene Kühlwasserreste werden dann praktisch vollständig in dem trichterförmigen Gehäuse 30 entfernt, in das der durch den Luftzuführungskanal 29 geleitete Luftstrom das erzeugte Granulat mitreißt, das dann schließlich aus dem Auslaß 32 des trichterförmigen Gehäuses austritt.

In Fig. 2 ist ein Ausschnitt aus der Fig. 1 dargestellt, der im wesentlichen die Zonen 19 und 30 umfaßt. Wie Fig. 2 zeigt, geht die Ablaufrinne 8 über die Rundung 33 in die erste Zone 19 über, was zur Folge hat, daß das über die Ablaufrinne 8 in Richtung auf die erste Zone 19 zufließende Kühlwasser aufgrund seiner Haftungseigenschaften entsprechend dem Krümmungsradius der Rundung 33 umgelenkt wird, wodurch das Kühlwasser im wesentlichen in Querrichtung auf die erste Zone 19 auftrifft. Aufgrund dieser Richtungsänderung kann sich der sonst gegebene Durchlaßwiderstand der einzelnen Durchlässe 34 in der ersten Zone 19 nicht so stark auswirken, wie dies der Fall wäre, wenn das Kühlwasser praktisch in Richtung der Oberfläche der ersten Zone 19 auf diese zuströmen würde.

Bei der in der Fig. 2 dargestellten Anordnung sind die Durchlässe 34 in den Zonen 19 und 20 zeichnerisch als Punkte dargestellt. Sie sollen die Anordnung von parallel mit Zwischenraum zueinander angeordneten Stäben zeigen, die anstelle von Sieben vorgesehen sind. Die Stäbe verlaufen quer zur Abzugsrichtung der Kunststoffstränge.

Der in der Fig. 3 dargestellte Nachabscheider besteht aus dem trichterförmigen Gehäuse 30 mit dem Deckel 35 und dem Einlaufstutzten 36, an den der Luftzuführungskanal 29 angeschlossen ist. Der Einlaufstutzen 36 trifft etwa tangential in der unteren Hälfte des Konusbereiches des Gehäuses 30 auf dieses auf. Das in Richtung des Pfeils 37 in das Gehäuse 30 hineingeschleuderte Granulat trifft auf die Innenwand des Konus 38 und wird aufgrund des Winkels des Konus 38 entgegen der Schwerkraft hochgeschleudert, so daß es nach mehrfacher Reflexion gegen den Deckel 35 trifft. Je nach Auftreffwinkel auf die Innenwand des Konus 38 können sich dabei mehrere Reflexionsmöglichkeiten ergeben. Das Granulat, das schließlich in der erwähnten Weise gegen den Deckel 35 trifft, wird von diesem nach unten reflektiert und verläßt das Gehäuse 30 über den Auslaß 39. Da das Granulat schon praktisch wasserfrei in das trichterförmige Gehäuse 30 eintritt, besteht hier die Möglichkeit, aufgrund der mehrfachen Reflexionen und der intensiven Luftumspülung auch letzte Wasserreste vom Granulat praktisch vollständig zu entfernen. In Fig. 3 ist das trichterförmige Gehäuse 30 mit einer siebartigen Wandung versehen, was den Luftdurchtritt und gegebenenfalls das Abschleudern von Wasserresten erleichtert. Es ist aber auch möglich, das Gehäuse 30 aus nichtperforiertem Blech aufzubauen.

## Patentansprüche

1. Vorrichtung zum Abkühlen und Granulieren von schmelzflüssig aus Düsen (6) austretenden Strängen aus thermoplastischen Kunststoffen und Erzeugung getrockneten Granulats, mit einer mit ihrem oberen Ende unter den Düsen (6) angeordneten geneigten Ablaufrinne (8), einem dem unteren Ende der Ablaufrinne nachgeordneten Granulator (13) und einer auf der Ablaufrinne einen Kühlflüssigkeitsstrom erzeugenden Einrichtung (2, 3), wobei vom unteren Ende der Ablaufrinne die Stränge in den Eintritt des Granulators gelangen, dadurch gekennzeichnet, daß vor dem unteren Ende der Ablaufrinne (8) diese in Ablaufrichtung mit zwei aufeinanderfolgenden Zonen (19, 20) mit Durchlässen (34) versehen ist, die den freien Durchtritt der Kühlflüssigkeit gestatten, von denen die in Ablaufrichtung erste Zone (19) zu einem Wasserablauf (21) führt und die zweite Zone (20) von einem im wesentlichen in Richtung der Schwerkraft verlaufenden Luftstrom beaufschlagt ist.

2. Vorrichtung nach Anspruch 1, dadurch gekennzeichnet, daß die zweite Zone (20) zu einem Exhauster (24) führt.

3. Vorrichtung nach Anspruch 1 oder 2, dadurch gekennzeichnet, daß die Durchlässe (34) durch Siebe gebildet sind.

4. Vorrichtung nach Anspruch 1 oder 2, dadurch gekennzeichnet, daß die Durchlässe (34) durch parallel mit Zwischenraum angeordneten Stäben gebildet sind.

5. Vorrichtung nach einem der Ansprüche 1-4, dadurch gekennzeichnet, daß die Ablaufrinne (8) mit einer Rundung (33) in die erste Zone (19) übergeht.

6. Vorrichtung nach einem der Ansprüche 1-5, dadurch gekennzeichnet, daß der Ausgang des Granulators (13) in einen Luftzuführungskanal (29) mündet, der an ein trichterförmiges Gehäuse (30) mit Deckel (35) etwa tangial in der unteren Hälfte des Konusbereichs des Gehäuses angeschlossen ist, wobei die Luftgeschwindigkeit im Luftzuführungskanal (29) so gewählt ist, daß das vom Luftstrom mitgerissene Granulat auf die Innenwand des Konus (38) trifft, in Richtung auf den Deckel mehrfach reflektiert und vom Deckel zum Trichterauslaß (39) abgelenkt wird.

7. Vorrichtung nach Anspruch 6, dadurch gekennzeichnet, daß das Gehäuse (30) zumindest teilweise siebartig ausgebildet ist.

## Claims

1. An apparatus for cooling and pelletizing strands of thermoplastic synthetic materials emerging in the molten state from extrusion dies (6) and for producing dried pellets, having an inclined delivery channel (8) arranged with its upper end below the extrusion dies (6), a pelletizer (13) following on the lower end of the delivery channel and a device (2, 3) producing a stream of cooling fluid on the delivery channel, the strands reaching the entry to the pelletizer from the lower end of the delivery channel, characterised in that, before the lower end of the delivery channel (8), this is provided, in the delivery direction, with two successive zones (19, 20) with apertures (34) which permit the free passage of the cooling fluid, of which the first zone (19) in the delivery direction leads to a water outlet (21) and the second zone (20) is acted upon by a stream of air travelling substantially in the direction of the force of gravity.

2. An apparatus according to Claim 1, characterised in that the second zone (20) leads to an extract fan (24).

3. An apparatus according to Claim 1 or 2, characterised in that the apertures (34) are formed by screens.

4. An apparatus according to Claim 1 or 2, characterised in that the apertures (34) are formed by bars arranged parallel with spacing.

5. An apparatus according to any one of Claims 1-4, characterised in that the delivery channel (8) verges into the first zone (19) with a curve (33).

6. An apparatus according to any one of Claims 1-5, characterised in that the outlet of the pelletizer (13) leads into an air supply duct (29) which is connected to a funnel-shaped housing (30) with a cover (35), substantially tangentially in the lower half of the cone region of the housing, the velocity of the air in the air supply duct (29) being selected so that the pellets entrained by the stream of air strike the inner wall of the cone (38), are repeatedly reflected towards the cover and are deflected from the cover to the funnel outlet (39).

7. An apparatus according to Claim 6, characterised in that the housing (30) is constructed at least partially in the form of a screen.

## Revendications

1. Dispositif destiné à refroidir et à granuler des produits extrudés en matières synthétiques thermoplastiques, sortant en fusion de filières (6), ainsi qu'à produire des granulés séchés, comportant une goulotte d'écoulement (8) inclinée, dont l'extrémité supérieure est placée sous les filières (6), un granulateur (13) placé en aval de l'extrémité inférieure de la goulotte d'écoulement, ainsi qu'un dispositif (2, 3) produisant sur la goulotte d'écoulement un courant de liquide de refroidissement, les produits extrudés parvenant à l'entrée du granulateur à partir de l'extrémité inférieure de la goulotte d'écoulement, caractérisé en ce qu'avant son extrémité inférieure, la goulotte d'écoulement (8) est pourvue dans le sens de l'écoulement, de deux zones (19, 20) successives comportant des passages (34) qui permettent le libre passage du liquide de refroidissement, dont la première zone (19), dans le sens de l'écoulement, mène à une sortie d'eau (21) et la deuxième zone (20) est soumise à un courant d'air à peu près dirigé dans le sens de la force de gravité.

2. Dispositif selon la revendication 1, caractérisé en ce que la deuxième zone (20) conduit à un extracteur (24).

3. Dispositif selon la revendication 1 ou 2, caractérisé en ce que les passages (34) sont formés par des tamis.

4. Dispositif selon la revendication 1 ou 2, caractérisé en ce que les passages (34) sont formés par des barreaux parallèles, espacés.

5. Dispositif selon l'une des revendications 1 à 4, caractérisé en ce que la goulotte d'écoulement (8) forme un arrondi (33) avant d'arriver à la première zone (19).

6. Dispositif selon l'une des revendications 1 à 5, caractérisé en ce que la sortie du granulateur (13) débouche dans un conduit de guidage d'air (29) qui est raccordé à une enceinte (30) conique avec couvercle (35) à peu près tangentiellement, dans la moitié inférieure de la zone conique de cette enceinte, la vitesse de l'air dans le conduit d'arrivée d'air (29) étant choisie telle que les granulés emportés par le courant d'air parviennent sur la paroi interne du cône (38), réfléchis plusieurs fois en direction du couvercle, et déviés par le couvercle vers la sortie (39) de l'entonnoir.

7. Dispositif selon la revendication 6, caractérisé en ce que l'enceinte (30) est au moins partiellement conformée en tamis.

FIG. 1

FIG. 2

9

8

33

19

34

20

34

12

13

15

14

21

23

FIG. 3

35

30

38

37

29

36

39